# EUROPÄISCHE PATENTSCHRIFT

(11) **EP 0 581 770 B1**
(45) Veröffentlichungstag und Bekanntmachung des Hinweises auf die Patenterteilung: **15.11.1995**
(21) Anmeldenummer: 92903065.8
(22) Anmeldetag: 29.01.1992
(51) Int. Cl.: B01D 33/04, E02B 5/08

(54) **SIEBRECHEN**
SCREENING RAKE
RATEAU CRIBLEUR

(30) Priorität: 13.04.1991 DE 9104551 U
(43) Veröffentlichungstag der Anmeldung: 09.02.1994
(73) Patentinhaber: Bormet, Horst, D-64331 Weiterstadt (DE)
(72) Erfinder: BORMET, Horst, D-6108 Weiterstadt (DE); FINK, Erich, D-6110 Dieburg (DE)
(74) Vertreter: Katscher, Helmut, Dipl.-Ing.
(86) Internationale Anmeldenummer: EP9200186
(87) Internationale Veröffentlichungsnummer: WO9218221

(56) Entgegenhaltungen:
- EP-A- 0 389 816
- DE-A- 2 401 956
- GB-A- 2 045 634

## Beschreibung

Die Erfindung betrifft einen Siebrechen zum Austrag von Feststoffen aus einem Abwasserstrom, mit einem antreibbaren, in den Abwasserstrom einsetzbaren Siebband, das zwei seitliche Gliederketten aufweist, zwischen denen sich Tragstangen erstrecken, die Gruppen von nebeneinander angeordneten, mit Haken versehenen Siebgliedern tragen.

Abwässer müssen insbesondere vor der Behandlung in Kläranlagen von mitgeführten Feststoffen mechanisch gereinigt werden, die eine vorgegebene Partikelgröße überschreiten. Hierzu ist es bekannt, den Abwasserstrom durch einen Siebrechen zu leiten, der die Feststoffe zurückhält. In regelmäßigen Abständen oder kontinuierlich ist ein Austrag der Feststoffe erforderlich, um ein Verstopfen des Siebrechens zu vermeiden.

Zu diesem Zweck sind Siebrechen oder Filterrechen in unterschiedlicher Bauart bekannt. Überwiegend weisen diese Siebrechen ein nach Art eines Paternosters endlos umlaufendes, angetriebenes Siebband auf, das aus einzelnen Siebgliedern besteht, die mit ihren Zwischenräumen die vom Abwasserstrom durchströmte Siebfläche bilden.

Üblicherweise sind die Siebglieder oder zumindest einige der im Siebband zusammengefaßten Siebglieder mit Haken, Stufen oder anderen Vorsprüngen versehen, die dazu dienen, die angeschwemmten Feststoffe, insbesondere auch größere Körper, mitzunehmen und aus dem Abwasserstrom auszutragen. Am Kopf des Siebbandes werden die Feststoffe auf eine Abfördereinrichtung abgeworfen. Um festhaftende Feststoffe zu entfernen, kann beispielsweise eine drehangetriebene Bürste vorgesehen sein.

Durch die in sehr unterschiedlicher Beschaffenheit anfallenden Feststoffe, beispielsweise auch große und harte Körper, sind Beschädigungen der Siebglieder, vor allem der daran angebrachten Haken, unvermeidlich. Solche beschädigten Siebglieder müssen ausgewechselt werden.

Bei einem bekannten Siebrechen der eingangs genannten Gattung (Firmendruckschrift SK Technical Bulletin 120 "AQUA-GUARD") wird jedes der mit einem Haken versehenen Siebglieder von zwei Tragstangen getragen. Diese Siebglieder sind jedoch so gestaffelt angeordnet, daß alle Tragstangen mit jeder der beiden benachbarten Tragstangen über mehrere von diesen gemeinsam getragenen Siebgliedern verbunden sind. Das Auswechseln von beschädigten Siebgliedern ist daher verhältnismäßig aufwendig und erfordert eine längere Betriebsunterbrechung, weil beim Lösen von zwei Tragstangen nicht nur die von diesen beiden Tragstangen gemeinsam getragenen Siebglieder gelöst werden, sondern weil auch die sich zu den jeweils benachbarten Tragstangen erstreckenden Siebglieder teilweise gelöst werden. Das Siebband kann somit erst nach dem vollständigen Ersatz der beschädigten Siebglieder wieder in Betrieb genommen werden.

Bei einer anderen bekannten Bauart von Siebrechen (DE-A-39 10 464) sind zwar alle nebeneinanderliegenden, zu einer Gruppe zusammengefaßten Siebglieder nur auf zwei gemeinsamen Tragstangen aufgenommen. Die Verbindung zu den jeweils benachbarten Tragstangen geschieht hierbei ausschließlich durch nicht mit Haken versehene Verbindungsglieder. Hierbei sind jedoch keine seitlichen Gliederketten vorhanden, so daß auch dieses bekannte Siebband zum Auswechseln von beschädigten Siebgliedern so lange außer Betrieb gesetzt werden muß, bis alle beschädigten Siebglieder ausgewechselt sind.

Eine längere Betriebsunterbrechung ist bei derartigen Siebrechen aber normalerweise nicht ohne weiteres möglich, weil die sich am Siebband ansammelnden Feststoffe das Siebband zusetzen würden, so daß der Strömungswiderstand erheblich ansteigt und der Abwasserstrom in unzulässiger Weise gedrosselt würde. Es ist deshalb erforderlich, entweder durch Parallelschaltung eines oder mehrerer weiterer Siebrechen die Möglichkeit zu schaffen, den jeweils reparaturbedürftigen Siebrechen außer Betrieb zu nehmen, oder der Siebrechen muß aus dem Abwasserkanal herausgenommen und während der Reparaturzeit durch einen in Reserve gehaltenen weiteren Siebrechen, beispielsweise einen einfachen, von Hand zu reinigenden Siebrechen ersetzt werden. Alle diese Maßnahmen sind jedoch sehr aufwendig und kostspielig.

Aus der GB-A-2 045 634 ist ein Siebrechen bekannt, bei dem ebenso wie beim Anmeldungsgegenstand der Rechenantrieb über eine Ketter erfolgt. Die Siebglieder einer Gruppe sind jedoch nur über eine Tragstange miteinander verbunden, auf der sie frei schwenkbar gelagert sind. Hierbei ist es zwar möglich, einzelne Siebglieder bei Beschädigung auszuwechseln, wobei die Funktionsfähigkeit des Siebrechens im wesentlichen erhlaten bleibt. Die Führung und Verschwenkung der Siebglieder erfolgt durch innenliegende Führungskurven, an denen Arme der Siebglieder entlang geführt werden. Die Siebwirkung ist nur unzureichend, weil keine wirksame Siebfläche mit vorgegebener Spaltweite gebildet wird. Die Siebwirkung besteht nur darin, daß jedes Siebglied, das sich jeweils über die gesamte Breite der Kette erstreckt, jeweils ein Gitter von Stäben trägt, das durch den Arm hochgeschwenkt werden kann. Dabei ist aber nicht sichergestellt, daß die Gitter eine ausreichend geschlossene Siebfläche bilden. Zwischen aufeinanderfolgende Siebglieder kann eine Öffnung bestehen bleiben, durch die das Schmutzwasser ungehindert passieren kann.

Aufgabe der Erfindung ist es daher, einen Siebrechen der eingangs genannten Gattung so auszubilden, daß er auch nach dem Ausfall einzelner Siebglieder oder ganzer Gruppen von Siebgliedern und nach deren Ausbau noch weitestgehend funktionsfähig bleibt, so daß Betriebsunterbrechungen entweder vollständig vermieden oder zumindest sehr kurz gehalten werden können, wobei aber in jedem Betriebszustand ein Auftreten von Spalten im Siebband des Siebrechens sicher vermieden werden soll.

Diese Aufgabe wird erfindungsgemäß dadurch gelöst, daß jede Gruppe von Siebgliedern auf zwei Tragstangen unabhängig von der vorangehenden und der nachfolgenden Gruppe von Siebgliedern angeordnet ist, daß die Siebgitter jeder Gruppe in Bandlaufrichtung und entgegengesetzt dazu über die beiden zugeordneten Tragstangen hinausragende Gliedfortsätze aufweisen und daß die Gliedfortsätze aufeinanderfolgender Gruppen von Siebgliedern kammartig ineinandergreifen.

Diese Bauweise ermöglicht es, eine solche Gruppe von Siebgliedern, die teilweise beschädigt sind, vollständig auszubauen, wobei die zugeordneten beiden Tragstangen entweder ohne Siebglieder wieder eingesetzt oder durch Bolzen für die Gliederketten ersetzt werden. Nach diesem in kurzer Zeit und ohne Betriebsunterbrechung auszuführenden Ausbau einer Gruppe von Siebgliedern kann das Siebband weiter in Betrieb bleiben. Die Stelle, die nach dem Ausbau der Gruppe von Siebgliedern den freien Durchfluß des Abwasserstroms ermöglicht, kann beim Umlauf des Siebbandes im Schnellauf durch den Abwasserstrom hindurchbewegt werden, so daß unmittelbar danach wieder eine vollständige funktionsfähige Fläche des Siebbandes zur Wirkung kommt.

Durch die Gliedfortsätze wird eine besonders wirksame Überbrückung des Abstands zwischen den benachbarten Gruppen von Siebgliedern erreicht, ohne daß zwischen benachbarten Gruppen von Siebgliedern eine funktionelle Abhängigkeit besteht, die den Ausbau einzelner Gruppen erschweren oder stören könnte.

Weitere vorteilhafte Ausgestaltungen des Erfindungsgedankens sind Gegenstand von abhängigen Ansprüchen.

Die Erfindung wird nachfolgend an Ausführungsbeispielen näher erläutert, die in der Zeichnung dargestellt sind. Es zeigt:
Fig. 1 einen in einem Abwasserstrom angeordneten Siebrechen in vereinfachter Darstellungsweise in einem senkrechten Schnitt,
Fig. 2 eine Teil-Draufsicht auf das Siebband des Siebrechens in Richtung des Pfeiles II in Fig. 1,
Fig. 3 einen Schnitt längs der Linie III-III in Fig. 2,
Fig. 4 Teile des Siebbandes des Siebrechens nach Fig. 1 in auseinandergezogener räumlicher Darstellungsweise,
Fig. 5 eine Draufsicht auf ein einzelnes Siebglied,
Fig. 6 das Siebglied nach Fig. 5 in einer Seitenansicht in Richtung des Pfeiles VI,
Fig. 7 ein abgewandeltes Siebglied in einer Draufsicht entsprechend der Fig. 5 und
Fig. 8 eine Ansicht des Siebgliedes nach Fig. 7 in einer Ansicht in Richtung des Pfeiles VIII.

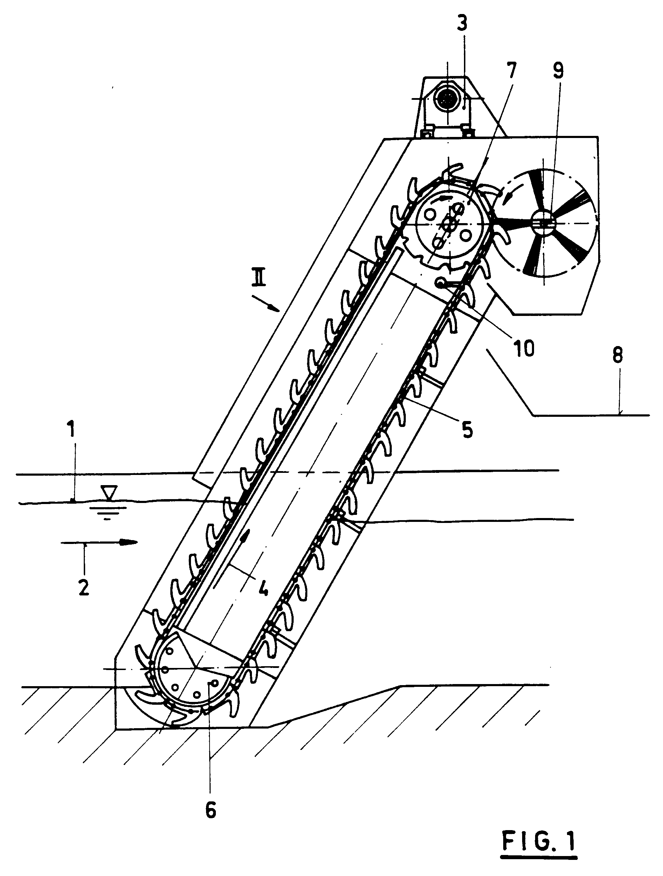

Der in Fig. 1 dargestellte Siebrechen dient zum Austrag von Feststoffen, insbesondere auch größeren Körpern, aus einem in einem Abwasserkanal 1 fließenden Abwasserstrom. Die Flußrichtung ist durch einen Pfeil 2 angedeutet. Der Siebrechen ragt mit seinem unteren Abschnitt in den Abwasserstrom und erstreckt sich von dort schräg nach oben über den Abwasserkanal 1 hinaus.

Der Siebrechen weist ein endlos in Richtung des Pfeiles 4 umlaufendes Siebband 5 auf, das über eine untere Umlenkrolle 6 und eine obere Umlenkrolle 7 geführt ist, die von einem Bandantrieb 3 angetrieben wird.

Die am Kopf des Siebbandes 5 abgeworfenen Feststoffe fallen auf eine in der Zeichnung nur vereinfacht angedeutete Abfördereinrichtung 8. Der Abwurf der Feststoffe wird durch eine angetriebene Bürstwalze 9 und erforderlichenfalls eine Sprüheinrichtung 10 unterstützt.

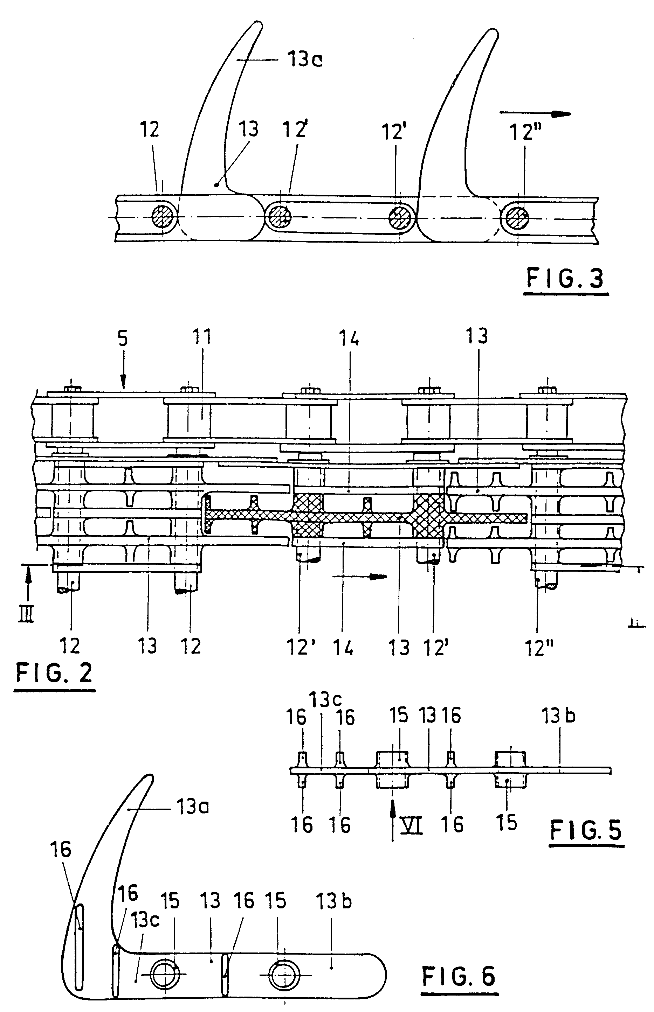

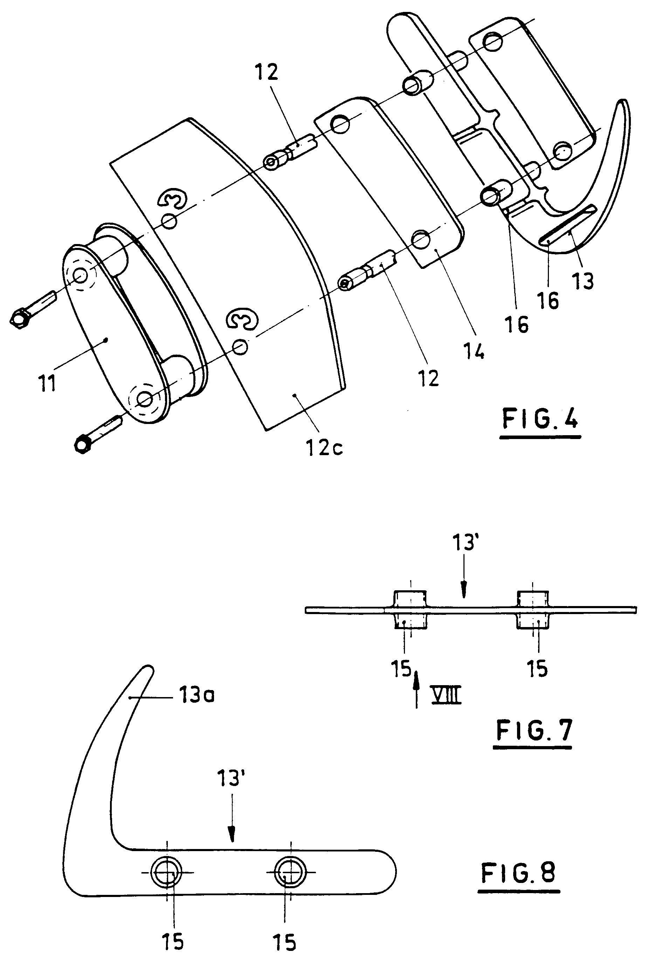

Wie in Einzelheiten aus den Fig. 2 und 4 zu erkennen ist, weist das Siebband 5 zwei seitliche Gliederketten 11 auf, die über die Umlenkrollen 6 und 7 laufen. Zwischen den beiden Gliederketten 11 erstrecken sich in regelmäßigen Abständen Tragstangen 12, die mit ihren Enden zugleich die Bolzen der Gliederketten 5 bilden.

Auf den Tragstangen 12 sind jeweils unmittelbar neben den seitlichen Gliederketten 5 flache Sietenbegrenzungsstücke 12c angeordnet, die gemeinsam eine seitliche Begrenzung auf beiden Längsseiten des Siebbandes 5 bilden.

Die Tragstangen 12 tragen mehrere Siebglieder 13, zwischen denen jeweils Distanzglieder 14 angeordnet sind. Der deutlicheren Erkennbarkeit halber ist in Fig. 2 eines der Siebglieder 13 kreuzschraffiert angelegt.

Wie man aus Fig. 2 erkennt, ist jeweils eine Gruppe von mehreren, mit Haken 13a versehenen Siebgliedern 13 mit dazwischen angeordneten Distanzgliedern 14 auf zwei Tragstangen 12 aufgenommen. Die benachbarte Gruppe von Siebgliedern 13 sind unabhängig davon wiederum auf zwei nur hierfür vorgesehenen Tragstangen 12' aufgenommen. Die nächste Gruppe von Siebgliedern 13 ist wiederum unabhängig davon auf zwei zugeordneten Tragstangen 12'' aufgenommen. Durch diese Anordnung wird erreicht, daß jede Gruppe von nebeneinander angeordneten Siebgliedern unabhängig von der vorangehenden und der nachfolgenden Gruppe von Siebgliedern 13 auf zwei gesonderten Tragstangen 12 bzw. 12' bzw. 12'' usw. getragen wird.

Es ist deshalb möglich, jeweils eine solche Gruppe von nebeneinander angeordneten Siebgliedern 13 völlig unabhängig und unbeeinflußt von den benachbarten Siebgliedern auszubauen und zu ersetzen. Der Ersatz beschädigter Siebglieder ist nicht sofort erforderlich. Es genügt, die Tragstangen 12 wieder einzusetzen oder durch gesonderte Kettenbolzen für die Gliederketten 5 zeitweilig zu ersetzen.

Um eine vollständige Überdeckung des Zwischenraums zwischen benachbarten Gruppen von Siebgliedern zu erreichen, sind die Siebglieder 13 so gestaltet, daß sie in jeder Gruppe in Bandlaufrichtung und entgegengesetzt dazu über die beiden zugeordneten Tragstangen 12 bzw. 12' bzw. 12'' hinausragende Gliedfortsätze 13b und 13c aufweisen. Die in Bandlaufrichtung nach vorn ragenden Gliedfortsätze 13b der einen Gruppe und die entgegengesetzt zur Bandlaufrichtung ragenden, mit den Haken 13a versehenen Gliedfortsätze 13c der Siebglieder der benachbarten Gruppe greifen kammartig ineinander.

Die Siebglieder 13 bestehen aus Flachmaterial, das in einer sich senkrecht zu den Tragstangen 12 erstreckenden Ebene liegt. Um eine sichere Lagerung auf den Tragstangen 12 und die Einhaltung des vorgegebenen Abstands zu den benachbarten Siebgliedern zu gewährleisten, haben die Siebglieder 13 jeweils zwei auf den beiden Tragstangen 12 gelagerte Lagerhülsen 15, die sich bei dem dargestellten Ausführungsbeispiel nach beiden Seiten über das Flachmaterial des Siebgliedes 13 hinaus erstrecken.

Bei dem in den Fig. 1-6 dargestellten Ausführungsbeispiel tragen die Siebglieder 13 an ihrem zwischen den beiden Tragstangen 12 liegenden Mittelabschnitt und an dem Gliedfortsatz 13c seitliche Siebrippen 16, durch die die Zwischenräume zwischen benachbarten Siebgliedern 13 unterteilt werden, um ein engmaschigeres Sieb zu erhalten. Die seitlichen Siebrippen 16 können abweichend von der dargestellten Ausführungsform auch an dem vorderen Gliedfortsatz 13b vorgesehen und an dem hinteren Gliedfortsatz 13c weggelassen werden.

Bei dem in den Fig. 7 und 8 dargestellten abgewandelten Ausführungsbeispiel der Siebglieder 13' sind diese seitlichen Siebrippen 16 weggelassen. Diese einfachere Bauart reicht aus, wenn entweder eine größere Siebweite zugelassen wird oder die Siebweite durch engere Anordnung der benachbarten Siebglieder ausreichend klein gehalten werden kann.

## Patentansprüche

1. Siebrechen zum Austrag von Feststoffen aus einem Abwasserstrom, mit einem antreibbaren, in den Abwasserstrom einsetzbaren Siebband (5), das zwei seitliche Gliederketten (11) aufweist, zwischen denen sich Tragstangen (12, 12', 12'') erstrecken, die Gruppen von nebeneinander angeordneten, mit Haken (13a) versehenen Siebgliedern (13, 13')tragen, dadurch gekennzeichnet, daß jede Gruppe von siebgliedern (13, 13') auf zwei Tragstangen (12 bzw. 12' bzw. 12'') unabhängig von der vorangehenden und der nachfolgenden Gruppe von Siebgliedern (13, 13') angeordnet ist, daß die Siebglieder (13) jeder Gruppe in Bandlaufrichtung und entgegengesetzt dazu über die beiden zugeordneten Tragstangen (12 bzw. 12' bzw. 12'') hinausragende Gliedfortsätze (13b, 13c) aufweisen und daß die Gliedfortsätze (13b, 13c) aufeinanderfolgender Gruppen von Siebgliedern (13 bzw. 13') kammartig ineinandergreifen.

2. Siebrechen nach Anspruch 1, dadurch gekennzeichnet, daß die sich entgegengesetzt zur Bandlaufrichtung erstreckenden hinteren Gliedfortsätze (13c) jeweils einen aus der Bandebene herausragenden Haken (13a) tragen.

3. Siebrechen nach Anspruch 1, dadurch gekennzeichnet, daß die Siebglieder (13, 13', 14) aus Flachmaterial bestehen, das in einer sich senkrecht zu den Tragstangen (12, 12', 12'') erstreckenden Ebene liegt.

4. Siebrechen nach Anspruch 3, dadurch gekennzeichnet, daß die Siebglieder (13, 13') jeweils zwei auf den beiden Tragstangen (12, 12', 12'') gelagerte Lagerhülsen (15) aufweisen.

5. Siebrechen nach Anspruch 1, dadurch gekennzeichnet, daß die Siebglieder (13) an ihrem zwischen den beiden Tragstangen (12) liegenden Mittelabschnitt und an mindestens einem der beiden Gliedfortsätze (13b bzw. 13c) seitliche Siebrippen (16) aufweisen.

## Claims

1. Rake screen for removal of solids from a stream of waste water, having a driven screen belt (5) which can be inserted into the stream of waste water, which has twin side link chains (11), between which support rods (12, 12', 12'') extend, which support groups of screen members (12, 13') located next to each other, provided with hooks (13a), characterised in that each group of screen members (13, 13') is located on two support rods (12 or 12' or 12'') independently of the preceding and the succeeding group of screen members (13, 13'), that the screen members (13) of each group have member prolongations (13b, 13c) projecting beyond the two assigned support rods (12 or 12' or 12'') in the direction in which the belt runs and opposite to this, and that the member prolongations (13b, 13c) of successive groups of screen members (13 or 13') engage into each other like combs.

2. Rake screen according to Claim 1, characterised in that the rear member prolongations (13c) extending in an opposite direction to the direction in which the belt runs, each carry a hook (13a) projecting out of the belt plane.

3. Rake screen according to Claim 1 characterised in that the screen members (13, 13', 14) consist of flat material which lies in a plane extending perpendicularly to the support rods (12, 12', 12'').

4. Rake screen according to Claim 3, characterised in that the screen members (13, 13') each have two bearing bushings (15) supported on the two support rods (12, 12', 12'').

5. Rake screen according to Claim 1, characterised in that the screen members (13) have on their centre section lying between the two support rods (12) and on at least one of the two member prolongations (13b or 13c) lateral screening ribs (16).

## Revendications

1. Râteau cribleur pour extraire des matières solides d'un courant d'eaux usées, comportant une bande de criblage (5) qui peut être introduite dans le courant d'eaux usées, ladite bande présentant deux chaînes à maillons latérales (11), entre lesquelles s'étendent des tiges de support (12, 12', 12'') qui supportent des groupes de maillons de crible (13, 13') agencés l'un à côté de l'autre et pourvus de crochets (13a), caractérisé en ce que chaque groupe de maillons de crible (13, 13') est agencé sur deux tiges de support (12 ou 12' ou 12'') indépendamment du groupe précédent et du groupe suivant de maillons de crible (13, 13'), en ce que les maillons de crible (13) de chaque groupe présentent, dans la direction de déplacement de la bande et dans la direction contraire, des prolongements (13b, 13c) faisant saillie au-dessus des deux tiges de support (12 ou 12' ou 12'') qui leur sont affectées, et en ce que les prolongements (13b, 13c) de groupes successifs de maillons de crible (13 ou 13') s'engrènent les uns dans les autres à la manière d'un peigne.

2. Râteau cribleur selon la revendication 1, caractérisé en ce que les prolongements arrière (13c) qui s'étendent à l'opposé de la direction de déplacement de la bande portent respectivement un crochet (13a) qui fait saillie du plan de la bande.

3. Râteau cribleur selon la revendication 1, caractérisé en ce que les maillons de crible (13, 13', 13'') sont constitués d'une matière plate qui se trouve dans un plan s'étendant perpendiculairement aux tiges de support (12, 12'', 12'').

4. Râteau cribleur selon la revendication 3, caractérisé en ce que les maillons de crible (13, 13') présentent respectivement deux douilles-paliers montées sur les deux tiges de support (12, 12', 12'').

5. Râteau cribleur selon la revendication 1, caractérisé en ce que les maillons de crible (13) présentent des nervures latérales de criblage (16) sur leur section centrale située entre les deux tiges de support (12) et sur au moins un des deux prolongements (13b ou 13c) du maillon.
